# EUROPEAN PATENT APPLICATION

(11) **EP 4 439 619 A1**
(43) Date of publication of application: **02.10.2024**
(21) Application number: 23212535.1
(22) Date of filing: 28.11.2023
(51) Int. Cl.: H01H 85/00, H01M 50/502

(54) **CIRCUIT PROTECTION STRUCTURE, CIRCUIT ASSEMBLY AND ENCAPSULATING METHOD THEREOF, AND CCS ASSEMBLY**

(30) Priority: 30.03.2023 CN 202310333818; 30.03.2023 CN 202320681089 U
(71) Applicant: Eve Energy Co. Ltd., Huizhou, Guangdong 516000 (CN)
(72) Inventor: Ma, Jinsi, Huizhou, Guangdong, 516000 (CN)
(74) Representative: Petraz, Gilberto Luigi

(57) **Abstract**

Disclosed in the present application is a circuit protection structure, a circuit assembly and an encapsulating method thereof, and a CCS assembly, the circuit protection structure including: an insulating plate, provided with at least one avoiding hole; and a patch fuse, provided in the avoiding hole, in which the patch fuse is used for connecting to a collecting circuit in series, and both a surface of the insulating plate and a surface of the patch fuse are provided with a coated layer, and the insulating plate and the patch fuse are provided integrally.

## Description

The present application claims priority of Chinese Patent Application No.202310333818.4 filed on March 30, 2023 before CNIPA, and Chinese Patent Application No.202320681089.7 filed on March 30, 2023 before CNIPA. All the above are hereby incorporated by reference in their entirety.

### Field

The present application relates to the technical field of batteries, in particular to a circuit protection structure, a circuit assembly and an encapsulating method thereof, and a cells contact system (CCS) assembly.

### Background

Regular battery module collecting circuit adopts usually the form of a flexible printed circuit (FPC) and flexible flat cable (FFC). Circuit fuses are usually etched on the wiring harness to design a weak area, so as to protect the electrical components and battery cells. The design of the above fuses suffers from the following defects:
1. The tolerance of the fuse circuit of the etched circuit is difficult to be controlled, and the tolerance range is relatively large, which may lead to unstable fusing time;
2. The etched fuse circuit is not repairable, and once damaged, the module requires replacement.
3. Generally, the minimum voltage of a single battery cell is a fixed value. It is known from I=U7R that the resistance of the collecting circuit should be regulated in order to obtain a certain amount of fusing current. When the circuit resistance is certain, the longer the collecting circuit is, the wider the circuit width is required to reduce the circuit resistance, so that the cost of raw materials for FPC increases, which is unfavorable for the long circuit resistance of the etched fuses.

### Summary

In order to overcome at least one of the defects of the prior art mentioned above, provided in the present application is a circuit protection structure. The present application may solve the problem of non-repairability of a fuse, which reduces the production cost of the fuse by adopting a patch fuse, which increases the repairing efficiency of the fuse, which reduces the repairing cost of the fuse and also solves the problem that the fuse width increases with increasing collecting circuit length.

As a first aspect, provided in an embodiment of the present application is a circuit protection structure, including an insulating plate, provided with at least one avoiding hole; and a patch fuse, provided in the avoiding hole, in which the patch fuse is used for connecting to a collecting circuit in series, and both a surface of the insulating plate and a surface of the patch fuse are provided with a coated layer, and the insulating plate and the patch fuse are provided integrally.

By adopting the solution mentioned above, the patch fuse saves the space occupation of the fuse in the collecting circuit, which saves the cost of the collecting circuit. A plurality of patch fuses forms a plastic laminated unit, and the plastic laminated unit may be replaced in its entirety when fused, so as to ensure that the fuses are repairable and replaceable. A circuit protection structure with a relatively low cost is achieved, which may increase the mounting stability between the patch fuse and the collecting circuit, which may also be repairable and replaceable, thereby increasing the convenience and practicality of the collecting circuit.

In one implementation, the insulating plate is provided with a closed protruding rib; an enclosing area of the protruding rib is provided with at least one avoiding hole; and the coated layer is provided within the enclosing area of the protruding rib.

By adopting the solution mentioned above, the protruding rib is provided to enclose the avoiding hole and the patch fuse, which effectively plays a role of protection and increases the safety of itself.

In one implementation, the avoiding holes are provided at intervals and correspond to the patch fuses one by one when the enclosing area of the protruding rib is provided with two or more avoiding holes.

By adopting the solution mentioned above, the avoiding holes reserve mounting space for the patch fuse, which achieves the mounting condition.

In one implementation, the protruding rib is provided along an exterior edge of the insulating plate
By adopting the solution mentioned above, an area of the insulating plate may be utilized maximally.

In one implementation, the coated layer is an antioxidant layer.

By adopting the solution mentioned above, the antioxidant layer is used to protect the fuse from oxidation, thereby preventing the fuse from non-fusing damage.

In one implementation, a height of the protruding rib protruding from the insulating plate is greater than that of the patch fuse protruding from the insulating plate.

By adopting the solution mentioned above, the protruding rib may provide protection for the fuse, thereby preventing the fuse from external wear and tear.

In one implementation, the insulating plate adopts an epoxy resin plate.

By adopting the solution mentioned above, the form of the epoxy resin plate varies, which may be adapted to the requirements placed on the form by various applications: easy curing, curable in the temperature range of 0~180°C; strong adhesion, polar hydroxyl and ether bonds enable high adhesion to a wide range of substances; and low shrinkage, showing very low shrinkage of less than 2% during the curing process. The cured epoxy resin system provides excellent mechanical and electrical properties, and is an excellent insulating material with high dielectric properties, resistance to surface current leakage, and resistance to electric arcs, which is also chemically stable, dimensionally stable and fungi resistant.

As a second aspect, provided in an embodiment of the present application is a circuit assembly, including a collecting circuit; an insulating plate, provided with at least one avoiding hole; and a patch fuse, provided in the avoiding hole, in which the patch fuse is connected to a collecting circuit in series, and both a surface of the insulating plate and a surface of the patch fuse are provided with a coated layer, and the insulating plate and the patch fuse are provided integrally.

By adopting the solution mentioned above, the patch fuse saves the space occupation of the fuse in the collecting circuit of the circuit assembly, which saves the cost of the collecting circuit. A plurality of patch fuses forms a single unit when laminated with plastic integrally. The plastic laminated unit may be replaced in its entirety when fused, so as to ensure that the fuses are repairable and replaceable. A circuit assembly with relatively low cost is achieved, which may increase the mounting stability between the patch fuse and the collecting circuit, which may also be repairable and replaceable, thereby increasing the practicality of the circuit assembly.

In one implementation, the insulating plate is provided with a closed protruding rib; an enclosing area of the protruding rib is provided with at least one avoiding hole; the coated layer is provided within the enclosing area of the protruding rib; the patch fuses are arranged in a single line or in a staggered arrangement when the enclosing area of the protruding rib is provided with a plurality of avoiding holes; and the patch fuses are arranged in a direction that intersects with a direction of parallel connection of a plurality of the collecting circuits so that each collecting circuit corresponds to a patch fuse.

By adopting the solution mentioned above, a volume of the insulating plate is reduced, which also satisfies the condition that the patch fuse corresponds to the collecting circuit one by one. Staggered arrangement increases the distance between each row of fuses, thereby enabling patch fuse mounting with close spacing between collecting circuits.

In one implementation, the collecting circuit is cables of an FPC or an FFC.

By adopting the solution mentioned above, the collection of battery modules is usually in the form of FPC and FFC, so the protection of the collecting circuit of different modules may be achieved.

As a third aspect, provided in an embodiment of the present application is a CCS assembly, including a circuit protection structure.

By adopting the solution mentioned above, the collecting circuit of the CCS assembly may be protected at a relatively low cost.

As a fourth aspect, provided in an embodiment of the present application is an encapsulating method of a collecting circuit, including hot pressing an insulating plate with avoiding holes on each group of the collecting circuit and mounting a patch fuse in the avoiding hole by surface mounting technology (hereinafter referred as SMT), or mounting patch fuse on each group of the collecting circuit by SMT respectively, and hot pressing and encapsulating the patch fuse by groups in the avoiding hole on an insulating plate so that the patch fuse is connected to the collecting circuit in series; coating a coated layer on a surface of the insulating plate and a surface of the patch fuse; and the insulating plate and the patch fuse are provided integrally.

By adopting the solution mentioned above, a patch fuse that is repairable, with stable tolerances and a relatively low overall cost is designed. When a short circuit occurs in the collecting circuit, the patch fuse is effectively fused. After the troubleshooting, the normal operation of the module may be restored by replacing a new fuse, which reduces the maintenance cost.

In summary, a circuit protection structure provided in the present application provides technical effects as follows:
1. By adopting a patch fuse, it avoids etching fuses in the collecting circuit, thereby effectively regulating the tolerance range and leading to a more stable fusing time;
2. By providing an epoxy resin plate and providing a protruding rib on the epoxy resin plate, the patch fuse is effectively enclosed and protected, which increases the safety of the patch fuse and avoids externally induced damage; and
3. By adopting a patch fuse instead of an etched fuse, the fuse is repairable, with stable tolerances and a relatively low overall cost, which results in low maintenance costs and eliminates the necessity to replace the entire module.

### Brief description of the drawings

Fig. 1 is a structural diagram of some embodiments of the present application assembled on an FPC;
Fig. 2 is a partially enlarged diagram of some embodiments of the present application assembled on an FPC;
Fig. 3 is a perspective view of a structural diagram of some embodiments of the present application;
Fig. 4 is a diagram of a planar assembly structure of a patch fuse of embodiment 2 of the present application;
Fig. 5 is a diagram of a planar assembly structure of a patch fuse of embodiment 2 of the present application.

The meanings of the attached markings are as follows: 1 insulating plate; 11 protruding rib; 2 patch fuse; 3 coated layer; 4 FPC.

### Detailed description of the embodiment

In the description of the present application, it is to be noted that the terms "up", "down", "front", "back", "left", "right", "vertical", "horizontal", "top", "bottom", "inside", "outside" and other orientation or position relationships are based on the orientation or position relationships shown in the attached drawings. It is only intended to facilitate description and simplify operation, but not to indicate or imply that the referred device or element has a specific orientation, or is constructed and operated in a specific orientation. Therefore, they should not be construed as a limitation of the present application.

Unless otherwise defined, all terms including technical and scientific terms used herein have the same meaning as commonly understood by those skilled in the art to which the present application belongs. The terms used herein in the specification of the present application are used only to describe specific embodiments and are not intended as a limitation of the application.

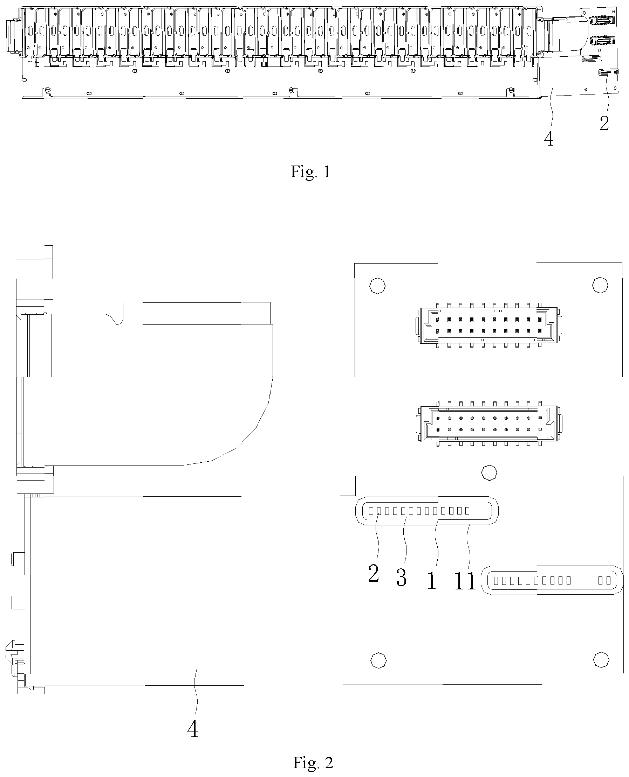

Referring to Fig. 1 to Fig. 3, in embodiment 1 of the present application, disclosed is a circuit protection structure, including an insulating plate 1, the insulating plate 1 being provided with a closed protruding rib 11, an enclosing area of the protruding rib 11 being provided with at least one avoiding hole; a patch fuse 2 is provided in the avoiding hole, and the patch fuse 2 is connected to a collecting circuit in series, the patch fuse 2 being electrically connected to the collecting circuit, which achieves the fuse protection of the collecting circuit; both a surface of the insulating plate 1 within the enclosing area of the protruding rib 11 and a surface of the patch fuse 2 are provided with a coated layer 3; and the insulating plate 1 and the patch fuse 2 are provided integrally. The patch fuse 2 saves the space occupation of the fuse in the collecting circuit, which saves the cost of the collecting circuit. A plurality of patch fuses 2 forms a plastic laminated unit, and the plastic laminated unit may be replaced in its entirety when fused, so as to ensure that the fuses are repairable and replaceable, thereby achieving a circuit protection structure at a relatively low cost.

In the present embodiment 1, there is one avoiding hole. The patch fuses 2 within the enclosing area of the protruding rib 11 are provided in the avoiding hole. Each patch fuse 2 is mounted in the corresponding collecting circuit by SMT, and the patch fuse 2 and the insulating plate 1 are encapsulated as a single unit by hot pressing. A coated layer 3 is coated between the patch fuse 2 and the protruding rib 11 and on a surface of the patch fuse 2 after encapsulating, so as to achieve relative fixation therebetween. The coated layer 3 may also protect the patch fuse 2, which prevents the patch fuse 2 from oxidation. It is to be noted that, the coated layer 2 in the present embodiment is a UV adhesive, in which the UV adhesive is used for preventing the fuse from oxidation, thereby preventing the fuse from non-fusing damage. Alternative adhesives with equivalent effects may be substituted in other embodiments, which is not specifically limited in the present embodiment.

In other embodiments, there may be two or more avoiding holes. Each patch fuse 2 within the enclosing area of the protruding rib 11 corresponds to one avoiding hole used for fixing the patch fuse 2 at intervals. The patch fuse 2 is mounted in the corresponding collecting circuit by SMT. After the avoiding hole of the insulating plate 1 corresponds to the patch fuse 2, hot pressing and encapsulating are performed to achieve the connection. Finally, an antioxidant layer is provided between the avoiding hole and the patch fuse 2 to improve the mounting stability, in which the antioxidant layer may include, but is not limited to, such as a UV adhesive, glue and welding. The antioxidant layer is provided on the patch fuse 2 to provide protection of antioxidants.

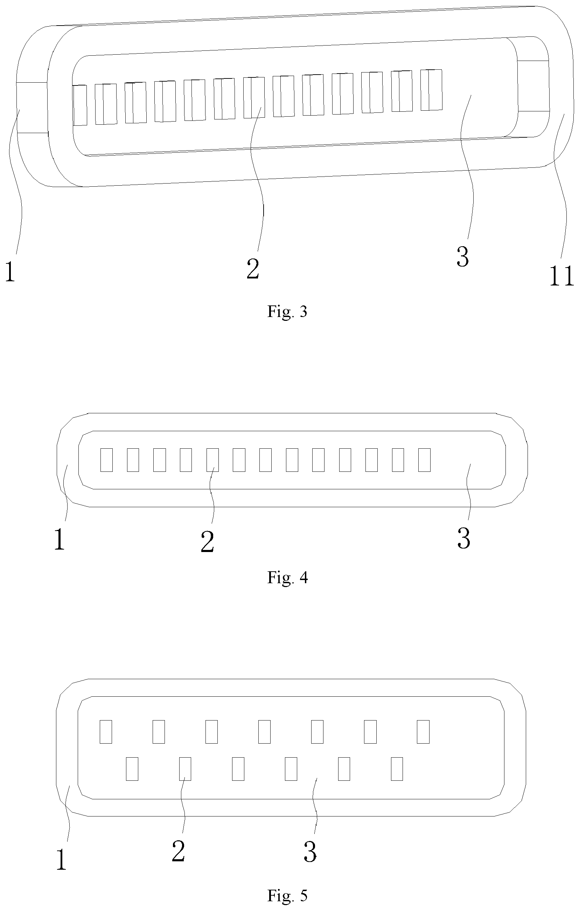

Referring to Fig. 4 and Fig. 5, in embodiment 2 of the present application, disclosed is a circuit assembly, including a collecting circuit; an insulating plate 1, the insulating plate 1 being provided with a closed protruding rib 11, an enclosing area of the protruding rib 11 being provided with at least one avoiding hole; a patch fuse 2 is provided in the avoiding hole, and the patch fuse 2 is connected to a collecting circuit in series, the patch fuse 2 being electrically connected to the collecting circuit, which achieves the fuse protection of the collecting circuit; both a surface of the insulating plate 1 within the enclosing area of the protruding rib 11 and a surface of the patch fuse 2 are provided with a coated layer 3; and the insulating plate 1 and the patch fuse 2 are provided integrally. The patch fuse 2 saves the space occupation of the fuse in the collecting circuit, which saves the cost of the collecting circuit. A plurality of patch fuses 2 form a single unit when laminated with plastic integrally. The plastic laminated unit may be replaced in its entirety when fused, so as to ensure that the fuses are repairable and replaceable, thereby achieving a circuit protection structure at a relatively low cost.

In the present embodiment 2, there are two or more avoiding holes. Each patch fuse 2 within the enclosing area of the protruding rib 11 corresponds to one avoiding hole used for fixing the patch fuse 2 at intervals. The patch fuse 2 is mounted in the corresponding collecting circuit by SMT. After the avoiding hole of the insulating plate 1 corresponds to the patch fuse 2, hot pressing and encapsulating are performed to achieve the connection. Finally, a sealing layer is provided between the avoiding hole and the patch fuse 2 to improve the mounting stability, in which the sealing layer may include, but is not limited to, such as glue and welding. The sealing layer is provided on the patch fuse 2 to provide protection of antioxidants. In the present embodiment 2, the sealing layer is a UV adhesive, in which the UV adhesive is used for preventing the fuse from oxidation, thereby preventing the fuse from non-fusing damage.

In a specific implementation of the present embodiment 2, the patch fuses 2 are arranged in a single line when the enclosing area of the protruding rib 11 is provided with a plurality of avoiding holes, and a plurality of the collecting circuits are connected in parallel; the patch fuses 2 are arranged in a direction that intersects with a direction of parallel connection of a plurality of the collecting circuits so that each collecting circuit corresponds to a patch fuse 2. A plurality of patch fuses 2 arranged in a single line may reduce the volume of the insulating plate 1, which also satisfies the condition that the patch fuse 2 corresponds to the collecting circuit one by one.

In a specific implementation of the present embodiment 2, the patch fuses 2 are arranged in a staggered arrangement when the enclosing area of the protruding rib 11 is provided with a plurality of avoiding holes, and a plurality of the collecting circuits are connected in parallel; the patch fuses 2 are arranged in a direction that intersects with a direction of parallel connection of a plurality of the collecting circuits so that each collecting circuit corresponds to a patch fuse 2. A plurality of patch fuses 2 arranged in a staggered arrangement may provide a relatively large distance between the patch fuses 2, which may increase the distance between the fuses of each row, thereby enabling patch fuse 2 mounting with close spacing between collecting circuits.

In a specific implementation of the present embodiment 2, the patch fuses 2 are arranged in a single line and/or a staggered arrangement when the enclosing area of the protruding rib 11 is provided with a plurality of avoiding holes, and the insulating plate 1 may enclose the patch fuses 2 according to the position thereof, only to satisfy that at least one patch fuse 2 is mounted corresponding to each collecting circuit.

In embodiment 1 and embodiment 2 mentioned above, it is to be noted that, a height of the protruding rib 11 protruding from the insulating plate 1 is greater than that of the patch fuse 2 protruding from the insulating plate 1. The protruding rib 11 may provide protection for the fuse, thereby preventing the fuse from external wear and tear.

Shapes of the insulating plate 1 include but are not limited to, such as oval, circular and rectangular. The protruding rib 11 is provided along an exterior edge of the insulating plate 1, which may increase the enclosing area of the protruding rib 11, thereby reducing an overall area of the insulating plate 1.

The insulating plate 1 is an epoxy resin plate. The form of the epoxy resin plate varies, which may be adapted to the requirements placed on the form by various applications: easy curing, curable in the temperature range of 0 ~ 180°C; strong adhesion, polar hydroxyl and ether bonds enable high adhesion to a wide range of substances; and low shrinkage, showing very low shrinkage of less than 2% during the curing process. The cured epoxy resin system provides excellent mechanical and electrical properties and is an excellent insulating material with high dielectric properties, resistance to surface current leakage, and resistance to electric arcs. which is also chemically stable, dimensionally stable and fungi-resistant.

The patch fuse 2 is provided integrally in the form of 0603, and 0603 indicates the encapsulating dimensions of an element. 0603 is normally indicated in the imperial system, in which 06 indicates a length L of 0.6 inches and 03 indicates a width W of 0.3 inches.

The collecting circuit is cables of FPC 4 or FFC, so as to achieve protection of the collecting circuit in the FPC 4 or FFC, thereby achieving protection of the collecting circuit in different battery modules. It is to be noted that, the circuit protection structure may not only be applied to the battery module but may also be applied to other devices or components with collecting circuits, so as to achieve the protection of the corresponding collecting circuit, which provides good fusing effect and convenient replacement.

In embodiment 3 of the present application, the provision of protruding rib 11 on the insulating plate 1 is canceled on the basis of embodiment 1 or embodiment 2. The insulating plate 1 is provided with at least one avoiding hole; the patch fuse 2 is provided in the avoiding hole, in which the patch fuse 2 is connected to a collecting circuit in series, and both a surface of the insulating plate 1 and a surface of the patch fuse 2 are provided with a coated layer 3, and the insulating plate 1 and the patch fuse 2 are provided integrally, which achieves the protection of the collecting circuit and provides simple assembly and convenient maintenance.

The present application also relates to a CCS assembly, the CCS assembly including a circuit assembly or a circuit protection structure that may protect the collecting circuit of the CCS assembly at a relatively low cost.

The present application also relates to an encapsulating method of a circuit assembly, which is applied to a battery module. In some embodiments, the battery module adopts a prismatic power battery module 1P44S, which includes four cell modules. Each cell module includes 10-13 cells. Firstly, the etched fuse on the FPC 4 of the battery module is canceled. The encapsulating method of the circuit assembly is as follows:
Step 1: Matching Circuit: selecting a collecting circuit to be encapsulated; taking the 1P44S module as an example, it is divided according to the four cell modules collected by the collecting circuit; four collecting circuits that the cell modules are required to be encapsulated together are divided in FPC 4, and the amount to be divided in other models of battery modules is not specifically limited.
Step 2: Mounting: mounting patch fuses 2 using SMT on the collecting circuits that are divided and required to be encapsulated together, so that the patch fuses 2 are connected to the collecting circuit in series; SMT is surface assembling technology, also known as surface mounting technology; and the patch fuses 2 are mounted in a straight line as far as possible.
Step 3: Encapsulating: hot pressing and encapsulating the mounted patch fuse 2 in the avoiding hole on the insulating plate 1; coating a coated layer on a surface of the insulating plate 1 and a surface of the patch fuse 2, and the insulating plate 1 and the patch fuse 2 are provided integrally; specifically, the divided four groups of patch fuse 2 are provided with an insulating plate 1 respectively, and hot pressing and encapsulating the patch fuses 2 by placing the avoiding holes of the insulating plate 1 directly in front of the patch fuses 2 so that the avoiding holes of the insulating plate 1 are out of the way of the patch fuses 2; and coating an antioxidant layer, i.e., UV adhesive, on a surface of the insulating plate 1 and on a surface of the patch fuse 2 within the enclosing area of the protruding rib 11.

In other embodiments, the encapsulating method of the circuit assembly may include steps as follows:
Step 1: Matching Circuit: selecting a collecting circuit to be encapsulated; taking the 1P44S module as an example, it is divided according to the four cell modules collected by the collecting circuit; four collecting circuits that the cell modules are required to be encapsulated together are divided in FPC 4, and the amount to be divided in other models of battery modules is not specifically limited.
Step 2: Encapsulating: hot pressing and encapsulating the collecting circuits divided into one group together by the insulating plate 1, and the insulating plate 1 is provided with reserved avoiding holes at each collecting circuit.
Step 3: mounting patch fuses 2 in each avoiding hole by SMT, so that the patch fuses 2 are connected to the collecting circuit in series; coating a coated layer on a surface of the insulating plate 1 and a surface of the patch fuse 2, and the insulating plate 1 and the patch fuse 2 are provided integrally, in which the coated layer is an antioxidant layer and specifically is UV adhesive.

For repair and replacement: removing damaged or fused patch fuse 2, and mounting a new patch fuse 2 by SMT to achieve the repair and replacement.

A patch fuse 2 protection apparatus that is repairable, with stable tolerances and a relatively low overall cost, is designed in the present assembling method. When a short circuit occurs in the circuit, the patch fuse is effectively fused. After the troubleshooting, the normal operation of the module may be restored by replacing a new fuse, which reduces the maintenance cost. In the case of an etched fuse, taking a one-meter collecting circuit with a fuse resistance of 0.32552 as an example, when the lowest voltage of a single cell is 2.5V, the fusing current and fusing time of the fuse is 0.9A and 5 seconds respectively. According to Ohm's law I = U/R, R=2.5/0.9=2.77Q. A circuit contains two wires, and then the single wire is divided into wire resistance of 2.77/2-0.325=1.06Ω. The more internal resistance is divided into 1-meter wires, the thinner the wires are, and the same amount of wires requires a smaller width. Conversely, etched circuits require a large width to reduce internal resistance if a certain wire resistance is to be maintained, which increases the cost of the FPC 4. The fuses in this application provide stable tolerances and lower overall costs compared to etched fuses.

In summary, a circuit protection structure, a circuit assembly and an encapsulating method thereof, and a CCS assembly provided in the present application provide technical effects as follows:
1. By adopting a patch fuse 2, it avoids etching fuses in the collecting circuit, thereby effectively regulating the tolerance range and leading to a more stable fusing time;
2. By providing an epoxy resin plate and providing a protruding rib 11 on the epoxy resin plate, the patch fuse 2 is effectively enclosed and protected, which increases the safety of the patch fuse 2 and avoids externally induced damage;
3. By coating a coated layer 3 within the protruding rib 11 of the epoxy resin plate, the fixation of the patch fuse 2 may be achieved, which may also protect the patch fuse 2 and prevent the patch fuse 2 from oxidation.
4. By adopting a patch fuse instead of an etched fuse, the fuse is repairable, with stable tolerances and a relatively low overall cost, which results in low maintenance costs and eliminates the necessity to replace the entire module.

## Claims

1. A circuit protection structure, comprising:
an insulating plate (1), provided with at least one avoiding hole; and
a patch fuse (2), provided in the avoiding hole, wherein the patch fuse (2) is used for connecting to a collecting circuit in series,
and both a surface of the insulating plate (1) and a surface of the patch fuse (2) are provided with a coated layer (3), and the insulating plate (1) and the patch fuse (2) are provided integrally.

2. The circuit protection structure according to claim 1, wherein the insulating plate (1) is provided with a closed protruding rib (11); an enclosing area of the protruding rib (11) is provided with at least one avoiding hole; and the coated layer (3) is provided within the enclosing area of the protruding rib (11).

3. The circuit protection structure according to claim 2, wherein the avoiding holes are provided at intervals and correspond to the patch fuses (2) one by one when the enclosing area of the protruding rib (11) is provided with two or more avoiding holes.

4. The circuit protection structure according to claim 2, wherein the protruding rib (11) is provided along an exterior edge of the insulating plate (1)

5. The circuit protection structure according to any one of claims 1-4, wherein the coated layer (3) is an antioxidant layer.

6. The circuit protection structure according to any one of claims 2-4, wherein a height of the protruding rib (11) protruding from the insulating plate (1) is greater than that of the patch fuse (2) protruding from the insulating plate (1).

7. The circuit protection structure according to any one of claims 1-4, wherein the insulating plate (1) is an epoxy resin plate.

8. A circuit assembly, comprising:
a collecting circuit;
an insulating plate (1), provided with at least one avoiding hole; and
a patch fuse (2), provided in the avoiding hole, wherein the patch fuse (2) is connected to the collecting circuit in series,
and both a surface of the insulating plate (1) and a surface of the patch fuse (2) are provided with a coated layer (3), and the insulating plate (1) and the patch fuse (2) are provided integrally.

9. The circuit assembly according to claim 8, wherein the insulating plate (1) is provided with a closed protruding rib(11); an enclosing area of the protruding rib (11) is provided with at least one avoiding hole; the coated layer (3) is provided within the enclosing area of the protruding rib(11); the patch fuses (2) are arranged in a single line or in a staggered arrangement when the enclosing area of the protruding rib(11) is provided with a plurality of avoiding holes; and the patch fuses (2) are arranged in a direction that intersects with a direction of parallel connection of a plurality of the collecting circuits, so that each collecting circuit corresponds to a patch fuse (2).

10. The circuit assembly according to claim 8 or 9, wherein the collecting circuit is cables of an FPC (4) or an FFC.

11. A CCS assembly, comprising the circuit assembly as claimed in any one of claims 8-10.

12. An encapsulating method of a circuit assembly, comprising:
selecting a collecting circuit to be encapsulated;
hot pressing an insulating plate (1) with avoiding holes on each group of the collecting circuit and mounting a patch fuse (2) in the avoiding hole by SMT, or mounting patch fuse (2) on each group of the collecting circuit by SMT respectively, and hot pressing and encapsulating the patch fuse (2) by groups in the avoiding hole on the insulating plate (1) so that the patch fuse (2) is connected to the collecting circuit in series;
coating a coated layer (3) on a surface of the insulating plate (1) and a surface of the patch fuse (2); and the insulating plate (1) and the patch fuse (2) are provided integrally.
